# EUROPÄISCHE PATENTSCHRIFT

(11) **EP 3 856 405 B1**
(45) Veröffentlichungstag und Bekanntmachung des Hinweises auf die Patenterteilung: **13.04.2022**
(21) Anmeldenummer: 19773765.3
(22) Anmeldetag: 17.09.2019
(51) Int. Cl.: B01J 19/18

(54) **REAKTOR ZUR ENTGASUNG EINER POLYMERSCHMELZE UND POLYKONDENSATION**
REACTOR FOR THE DEGASSING OF A POLYMER MELT AND FOR POLYCONDENSATION
RÉACTEUR PERMETTANT LE DÉGAZAGE D'UNE MASSE FONDUE POLYMÈRE ET LA POLYCONDENSATION

(30) Priorität: 24.09.2018 DE 102018216250
(43) Veröffentlichungstag der Anmeldung: 04.08.2021
(73) Patentinhaber: Uhde Inventa-Fischer GmbH, 13509 Berlin (DE); thyssenkrupp AG, 45143 Essen (DE)
(72) Erfinder: WOLF, Balazs, 7000 Chur (CH); HITTORFF, Martin, 7402 Bonaduz (CH); KOCH, Heinrich, 14532 Kleinmachnow (DE); WIEGAND, Gerwin, 16727 Oberkrämer (DE)
(74) Vertreter: thyssenkrupp Intellectual Property GmbH
(86) Internationale Anmeldenummer: PCT/EP2019/074871
(87) Internationale Veröffentlichungsnummer: WO 2020/064433

(56) Entgegenhaltungen:
- EP-B1- 2 026 903
- DE-B3-102006 047 942
- US-A1- 2009 302 489

## Beschreibung

Die vorliegende Erfindung betrifft einen Reaktor zur Entgasung einer Polymerschmelze und Polykondensation umfassend ein horizontal ausgerichtetes Reaktorgehäuse. Das Reaktorgehäuse weist zwei Stirnwände und mindestens einen Auslass für die entgaste Polymerschmelze sowie mindestens einen Brüdenstutzen auf. Der Reaktor der vorliegenden Erfindung zeichnet sich dadurch aus, dass im Inneren des Reaktorgehäuses ein horizontal angeordnetes Kompartimentierungselement vorhanden ist, das einen Rotor enthält. Der Rotor weist mindestens eine durch eine Stauwehranordnung begrenzte Öffnung in Richtung einer Stirnwand des Reaktorgehäuses auf. Des Weiteren besitzt der Rotor eine für die Polymerschmelze undurchlässige Rotorwandung und unterteilt das Innere des Reaktorgehäuses in ein inneres und ein äußeres Reaktorkompartiment. Außerdem umfasst der erfindungsgemäße Reaktor ein Rohr zur Zuführung der Polymerschmelze, das durch die eintrittsseitige Stirnwand verläuft. Dieses Rohr endet im Inneren des Rotors, so dass die Polymerschmelze in das innere Reaktorkompartiment eingeleitet wird.

Da die Nachfrage nach Polymeren am Markt unverändert hoch ist, wurden in den letzten Jahren etliche Vorreaktorsysteme des Polykondensationsreaktors konstruiert, die für eine größere Kapazität geeignet sind. Mit diesen können die begehrten Polymeren prinzipiell kosteneffizienter produziert werden. Eine fundamentale Weiterentwicklung der Polykondensationsreaktoren selbst hat indes nicht stattgefunden. Besonders die Reaktoren, in denen die Präpolymerschmelze bzw. Polymerschmelze von gasförmigen Reaktions- und Nebenprodukten befreit und gleichzeitig nachkondensiert wird, sind für die hohen Durchsätze bisher nicht optimal geeignet.

Der Aufbau eines herkömmlichen Reaktors zur Nachkondensation und Entgasung einer Polymerschmelze ist beispielsweise aus der EP 0 719 582 A1 bekannt. Dieser herkömmliche Reaktor weist im unteren Bereich einen Einlass für die Zufuhr einer Polymerschmelze an dem einem Ende und einen Auslass für deren Austrag an dem anderen Ende auf. Nachdem die Polymerschmelze in den Reaktor eingetreten ist, kann sie mit Hilfe von ringförmigen Elementen, die an einem drehbar gelagerten Rotor befestigt sind, durchmischt und in Richtung des Auslasses gefördert werden. Das dabei freiwerdende Gas kann unter anderem durch die Durchbrechungen bzw. Löcher in der Wandung des als Hohlzylinder ausgestalteten Rotors nach oben entweichen. Ein solcher Reaktoraufbau ist aber insbesondere bei hohen Durchsätzen nachteilig, da der größte Teil des Reaktorinnenraums ungenutzt bleibt: Um die Homogenität des Produktes zu gewährleisten, dürfen lediglich 18-22% des Gesamtvolumens des Reaktors von der Polymerschmelze eingenommen werden. Der Reaktor ist somit im Vergleich zu den anderen Anlagenkomponenten übermäßig groß dimensioniert. Dies hat nicht nur einen negativen Einfluss auf die Investitionskosten, die beim Bau einer neuen Polymerisationsanlage anfallen, sondern auch auf Transport-, Montage- und Reparaturarbeiten des Reaktors, die deutlich erschwert werden.

Auch der Reaktor, der Gegenstand der EP 2 026 903 B1 ist, weist diese in der EP 0 719 582 A1 beschriebene Grundstruktur auf. Auch der Großteil des Innenraums dieses Reaktors bleibt zwangsläufig frei, wenn ein homogenes Produkt erzeugt werden soll.

Ausgehend von den Nachteilen dieser Vorrichtungen aus dem Stand der Technik ist es Aufgabe der vorliegenden Erfindung, den Reaktor zur Nachkondensation und Entgasung der Polymerschmelze konstruktiv zu verbessern und den veränderten Marktanforderungen anzupassen. Eine weitere Aufgabe ist, ein Verfahren zur Entgasung und Polykondensation einer Polymerschmelze anzugeben, welches in Kombination mit den modernen Vorreaktorsystemen des Polykondensationsreaktors bzw. bei hohen Durchsätzen verwendet werden kann. Zuletzt sollen Verwendungen des erfindungsgemäßen Verfahrens aufgezeigt werden.

Diese Aufgaben werden hinsichtlich des Reaktors mit den Merkmalen des Patentanspruchs 1, bezüglich des Verfahrens mit den Merkmalen des Patentanspruchs 15 und bezüglich der Verwendung des Verfahrens mit den Merkmalen des Patentanspruchs 21 gelöst. Die abhängigen Patentansprüche stellen vorteilhafte Weiterbildungen dar.

Erfindungsgemäß wird ein Reaktor zur Entgasung einer Polymerschmelze und Polykondensation bis zum Erreichen einer gewünschten Polymerkettenlänge bereitgestellt, umfassend ein horizontal ausgerichtetes Reaktorgehäuse, das zwei Stirnwände und mindestens einen Auslass für die entgaste Polymerschmelze sowie mindestens einen Brüdenstutzen aufweist; ein darin horizontal angeordnetes Kompartimentierungselement, das einen Rotor mit einer für die Polymerschmelze undurchlässigen Rotorwandung aufweist, wobei der Rotor mindestens eine durch eine Stauwehranordnung begrenzte Öffnung in Richtung einer Stirnwand des Reaktorgehäuses aufweist und das Innere des Reaktorgehäuses in ein inneres und ein äußeres Reaktorkompartiment unterteilt; und ein durch die eintrittsseitige Stirnwand verlaufendes Rohr, das im Inneren des Rotors endet und durch welches die Polymerschmelze in das innere Reaktorkompartiment eingeleitet werden kann.

Durch das Kompartimentierungselement kann das Reaktorvolumen effektiver genutzt werden, da der Reaktorinnenraum in mindestens zwei rotationssymmetrisch zur Längsachse des Reaktors ausgebildete Reaktorkompartimente unterteilt wird. Bei gleichbleibenden Außen-Dimensionen können längere Verweilzeiten der Polymerschmelze erreicht werden. Darüber hinaus steht durch das Kompartimentierungselement eine größere Oberfläche im Inneren des Reaktors zur Verfügung, so dass es mehr Möglichkeiten gibt, bei Bedarf verschiedene Reaktoreinbauten im Inneren des Reaktors zu arrangieren.

Gleichzeitig können Ablagerungen der Polymerschmelze in dem erfindungsgemäßen Reaktor ebenso zuverlässig vermieden werden wie bei herkömmlichen Reaktoren. Die Wahrscheinlichkeit, dass sich im inneren Reaktorkompartiment Polymerablagerungen bilden, ist gering, da die Polymerschmelze einerseits beim Eintritt in den Reaktor noch niedrigviskos und fließfähig ist und andererseits einer ständigen Rotation ausgesetzt wird. Erst im äußeren Reaktorkompartiment, in dem die Polymerschmelze eine höhere Viskosität hat, ist die Gefahr, dass Polymerablagerungen entstehen, erhöht.

Die durch eine Stauwehranordnung begrenzte Öffnung des Rotors gewährleistet eine kontrollierte Kommunikation zwischen dem inneren und dem äußeren Reaktorkompartiment: Ein direktes Abfließen der Polymerschmelze in das äußere Reaktorkompartiment nach deren Eintritt in den Reaktor wird verhindert. Die Polymerschmelze kann erst vom inneren in das äußere Reaktorkompartiment strömen, wenn der Füllstand im inneren Reaktorkompartiment ein Mindest-Niveau erreicht hat, das durch die Höhe der Stauwehranordnung vorgegeben wird. Durch die Dimensionierung der Stauwehranordnung kann dementsprechend Einfluss auf die Verweilzeit der Polymerschmelze genommen werden.

Der Rotor unterstützt die Entgasung und Homogenisierung der Schmelze. Durch die Rotation des Rotors erfährt die Polymerschmelze neben dem horizontalen Transport entlang der Längsachse des Reaktors auch eine tangentiale Beschleunigung, so dass tiefere Schichten des Polymerschmelzfilms freigelegt werden und eine Oberflächenerneuerung stattfindet.

Vorteilhafterweise ist die Rotorwandung des Rotors zumindest auf einer Innenseite, bevorzugt aber auf beiden Seiten, mit einer Vielzahl an Transportelementen und/oder Mischelementen bestückt. Die Transport- und/oder Mischelemente, mit denen die Innenseite/beide Seiten Rotorwandung bestückt ist/sind, sind vorzugsweise geneigt angeordnet. Sie weisen beispielsweise einen Winkel zwischen 60 und 90 ° oder einen Winkel zwischen 80 und 90 ° zur Rotorwandung auf. Bevorzugt sind die Transport- und/oder Mischelemente versetzt zueinander und mit einem identischen Neigungswinkel angeordnet, so dass sie eine Schraubenform beschreiben.

Die Mischelemente tragen maßgeblich zur Oberflächenerneuerung des Polymerschmelzfilms bei und unterstützten dadurch die bereits angesprochene Entgasung und Homogenisierung der Schmelze. Die Transportelemente wirken auf den rückstandslosen Transport der Schmelze hin. Die Transportfunktion der Transportelemente ist dabei umso größer, je größer der Neigungswinkel ist, in dem die Transportelemente angeordnet sind.

Weiterhin ist es bevorzugt, wenn die Transport- und/oder Mischelemente als Scheiben mit runden- oder vieleckigen Öffnungen oder strukturierte oder unstrukturierte Lochscheiben mit oder ohne Schöpfelemente ausgeführt sind.

Das Reaktorgehäuse ist auf einer dem Inneren des Reaktorgehäuses zugewandten Seite bevorzugt mit statischen Abstreifern bestückt. Diese sind insbesondere in einem Bereich unterhalb des Rotors so angeordnet, dass sie zwischen die auf einer Außenseite der Rotorwandung angebrachten Mischelemente eingreifen. Zwischen den Abstreifern und den Mischelementen, die bei Rotation des Rotors kammartig in die Zwischenräume der Abstreifer eingreifen, wird eine Scherkraft erzeugt, die zu einer besseren Fließfähigkeit der Polymerschmelze führt. Außerdem verhindern die unbeweglichen Abstreifer, dass die Schichtdicke der Polymerschmelze auf den Scheiben zu groß wird, wozu es andernfalls aufgrund der im äußeren Reaktorkompartiment erhöhten Viskosität der Polymerschmelze in Rotationsrichtung der Mischelemente kommen kann.

Vorzugsweise weist der Rotor mindestens eine weitere Stauwehranordnung auf, die sich beispielsweise innerhalb des inneren Reaktorkompartiments befindet. Besonders bevorzugt ist, wenn sich die weitere Stauwehranordnung in unmittelbarer Nähe zu dem Ende des Rohres befindet, welches die Polymerschmelze in den Reaktor einleitet. Vorteilhafterweise ist diese weitere Stauwehranordnung höher als die Stauwehranordnung, welche die Öffnung des Rotors in Richtung einer Stirnwand des Reaktorgehäuses begrenzt. Die weitere Stauwehranordnung ermöglicht eine kontrollierte Entspannung der Polymerschmelze. Sie verhindert, dass feine Tröpfchen der Polymerschmelze, die sich unweigerlich durch das Entspannen der Polymerschmelze bei Eintritt in den Reaktor bilden, mit freiwerdenden gasförmigen Produkten mitgerissen werden und spritzen.

Die Rotorwandung kann die Form einer Zylinders, eines Kegelstumpfs oder eines Doppelkonus aufweisen. In der Praxis haben sich die Zylinderform und die Form des Doppelkonus als besonders geeignet erwiesen. Eine Rotorwandung, die in Form eines Doppelkonus ausgebildet ist, gibt durch ihre abgeschrägten Flächen bereits definierte Strömungsrichtungen für die Polymerschmelze vor.

Der Rotor kann mit zwei drehbar gelagerten Wellenenden durch Befestigungsmittel und gegebenenfalls durch eine Hülse verbunden sein. Die Befestigungsmittel sind bevorzugt aus der Gruppe bestehend aus Speichen, Speichenrädern, Lochscheiben, Vollscheiben und Kombinationen hiervon ausgewählt. Vollscheiben werden aber bevorzugt nur zur Verbindung mit dem Wellenende verwendet, das in Richtung der eintrittsseitigen Stirnwand des Reaktorgehäuses zeigt. Zur Befestigung des inneren Rotors mit dem anderen Wellenende werden hingegen bevorzugt Speichen, Speichenräder, Lochscheiben und Kombinationen dieser verwendet. Dadurch wird erreicht, dass die Polymerschmelze eine gewisse Zeit in dem inneren Reaktorkompartiment verweilt, bevor sie in das äußere Reaktorkompartiment gelangt.

In einer ersten Ausführungsform des erfindungsgemäßen Reaktors ragt das Rohr zur Zuführung der Polymerschmelze bis zu einem Punkt zwischen 30 und 70%, bevorzugt zwischen 40 bis 60%, der Reaktorlänge in das Reaktorgehäuse hinein. In dieser Ausführungsform weist der Rotor vorzugsweise zwei durch jeweils eine Stauwehranordnung begrenzte Öffnungen in Richtung der zwei Stirnwände auf. Zudem ist es in dieser Ausführungsform bevorzugt, wenn die Rotorwandung die Form eines Doppelkonus aufweist.

In einer zweiten Ausführungsform des erfindungsgemäßen Reaktors ragt das Rohr bis zu einem Punkt bei weniger als 15 %, bevorzugt weniger als 10 %, der Reaktorlänge in den Reaktor hinein und der Rotor weist besonders bevorzugt eine durch eine Stauwehranordnung begrenzte Öffnung in Richtung der Stirnwand auf, die der eintrittsseitige Stirnwand gegenüberliegt. In dieser zweiten Ausführungsform ist es vorteilhaft, wenn die Rotorwandung die Form eines Zylinders aufweist.

Vorteilhaft ist, wenn der Rotor oder das gesamte Kompartimentierungselement beheizbar ist. Bevorzugt weist der Rotor oder das Kompartimentierungelement hierfür eine Mantelheizung auf.

Durch die Beheizung des Rotors oder des Kompartimentierungselements mit einer Mantelheizung wird vermieden, dass die Polymerschmelze abkühlt und an der Rotorwandung oder den weiteren Oberflächen des Kompartimentierungselements anhaftet.

Einen noch bedeutenderen Vorteil bietet aber die Variante des Reaktors, in der das Reaktorgehäuse beheizbar ist. Zur Beheizung kann eine Mantelheizung installiert sein, die entweder in einem mit einem Wärmetauscherfluid betriebenen Heizmantel oder einer elektrischen Mantelheizung besteht.

Durch die Heizung des Reaktorgehäuses kann auch die Fließfähigkeit der mittel- bis hochviskosen Polymerschmelze im äußeren Reaktorkompartiment gezielt erhöht werden. Ein Verkleben der inneren Reaktorelemente kann dadurch ausgeschlossen werden.

Ein weiteres bevorzugtes Merkmal der Erfindung ist, dass der Reaktor gegenüber Umgebungsluft hermetisch abgedichtet ist, bevorzugt durch eine Drehkopfdichtung und/oder durch ein mit Sperrflüssigkeit beaufschlagtes Dichtungssystem. Die Wellenenden können im Inneren des Reaktorgehäuses gelagert sein oder in einem Lagergehäuse, das mit dem Reaktorgehäuse verbunden ist.

Das Verhältnis von Länge zu Durchmesser des Reaktorgehäuses beträgt bevorzugt 1,1 bis 4,0, besonders bevorzugt 1,5 bis 3,0, insbesondere 2,5 bis 3,0. Zudem ist es empfehlenswert, bei der Konstruktion des Reaktors auf die Dimensionierung des Rotors zu achten: Der Durchmesser des Rotors sollte vorteilhafterweise so gewählt werden, dass das Verhältnis von Durchmesser des Rotors zu Durchmesser des Reaktors zwischen 0,5 und 0,7 liegt. Außerdem ist es bevorzugt, wenn das Verhältnis zwischen Länge des Rotors und Länge des Reaktorgehäuses zwischen 0,50 und 0,99, bevorzugt zwischen 0,70 und 0,95 liegt.

Weiterhin ist bevorzugt, wenn der mindestens eine Auslass für die entgaste Polymerschmelze unterhalb und der mindestens eine Brüdenstutzen oberhalb des Rotors angeordnet ist. Die Position des mindestens einen Auslasses für die entgaste Polymerschmelze ist abhängig von der Ausgestaltung des Rotors zu wählen. Hat der Rotor zwei Öffnungen, ist es empfehlenswert, den mindestens einen Auslass mittig anzuordnen. Hat der Rotor nur eine Öffnung, ist der mindestens eine Auslass an dem Ende des Reaktorgehäuses angeordnet, das der Öffnung des Rotors gegenüberliegt.

In dieser Weise wird sichergestellt, dass der Fluss der Polymerschmelze mindestens ein Mal umgelenkt wird und sich die Polymerschmelze im äußeren Reaktorkompartiment im Gegenstrom zu der Polymerschmelze im inneren Reaktorkompartiment bewegt.

Um die Ausnutzung des Reaktorinnenraums weiter zu optimieren, wird außerdem noch eine weitere Reaktorausführungsform bereitgestellt, in der das Kompartimentierungselement einen weiteren Rotor enthält. Dieser weitere Rotor unterteilt das äußere Reaktorkompartiment in zwei Subkompartimente. Der weitere Rotor ist dabei bevorzugt durch dieselben Befestigungsmittel mit dem Rotor verbunden wie der Rotor mit den Wellenenden verbunden ist.

Erfindungsgemäß wird auch ein Verfahren zur Entgasung einer Polymerschmelze angegeben, bei dem einem Reaktor gemäß einem der vorhergehenden Ansprüche eine Polymerschmelze zugeführt wird. Bei dem Verfahren wird die Polymerschmelze zunächst durch ein Rohr in ein von einem Rotor umschlossenes erstes Reaktorkompartiment geführt und in Richtung mindestens einer Stauwehranordnung transportiert. Die Polymerschmelze passiert dann die mindestens eine Stauwehranordnung und gelangt in ein äußeres Reaktorkompartiment, bevor sie den Reaktor verlässt.

Bevorzugt wird dabei die Flussrichtung der Polymerschmelze in dem Reaktor mindestens einmal umgekehrt, bevorzugt beim Passieren der mindestens einen Stauwehranordnung. Der Fluss der Polymerschmelze kann beim Passieren der mindestens einen Stauwehranordnung bzw. beim Übergang von dem inneren Reaktorkompartiment in das äußere Reaktorkompartiment durch ein Umlenkblech geführt werden, welches die Stirnwand totraumfrei hält.

In einer bevorzugten Variante des Verfahren hat die dem Reaktor zugeführte Polymerschmelze eine intrinsische Viskosität von maximal 0,6 dL/g, besonders bevorzugt von maximal 0,5 dL/g, insbesondere von 0,25 bis 0,35 dL/g.

Vorteilhaft ist es, die Polymerschmelze dem Reaktor mit Hilfe einer Pumpe zuzuführen und die Schmelze dann mit Hilfe von rotierenden, in Förderrichtung geneigten Transportelementen und/oder Mischelementen von dem ersten Reaktorkompartiment zu dem mindestens einen weiteren Reaktorkompartiment zu transportieren, wobei die Rotationsgeschwindigkeit bevorzugt 0,5 - 10 Umdrehungen pro Minute, besonders bevorzugt 1,0 - 5 Umdrehungen pro Minute, insbesondere 1,5 - 3 Umdrehungen pro Minute, beträgt.

Außerdem ist es ratsam, den Reaktor während des Verfahrens kontinuierlich zu evakuieren. Im Reaktorinneren herrscht bevorzugt ein Druck von 0,1 bis 3,0 mbar, bevorzugt von 0,3 bis 1,0 mbar. Das Evakuieren unterstützt die Entgasung der Polymerschmelze und führt dazu, dass möglichst wenig gasförmige Reaktions- und Nebenprodukte in dem Produkt verbleiben.

Das Reaktorgehäuse wird mit Hilfe einer Mantelheizung bevorzugt auf eine Temperatur von 10 bis 50 °C über dem Schmelzpunkt des Polymers, besonders bevorzugt von 15 bis 30 °C über dem Schmelzpunkt des Polymers, eingestellt.

Zuletzt wird mit der Erfindung vorgeschlagen, dass das oben beschriebene Verfahren zur Herstellung von Polyester, insbesondere PET, mit einer intrinsischen Viskosität im Bereich von 0,6 bis 1,0 dL/g, bevorzugt in einem Bereich von 0,70 bis 0,85 dL/g, besonders bevorzugt in einem Bereich von 0,72 bis 0,82 dL/g, verwendet wird.

Die Polyester mit einer intrinsischen Viskosität von etwa 0,64 eignen sich für textile Anwendungen und zur Herstellung von biaxial orientierten PolyesterFolien (BO-PET). Polyester mit einer höheren intrinsischen Viskosität werden hingegen eher zur Herstellung von Getränkeflaschen verwendet.

Die vorliegende Erfindung wird anhand der nachfolgend beigefügten Figuren näher erläutert, ohne die Erfindung jedoch auf die speziell dargestellten Parameter zu beschränken. Dabei zeigen
die Figur 1 eine Darstellung eines erfindungsgemäßen Reaktors mit einem Rotor, dessen Rotorwandung die Form eines Doppelkonus aufweist,
die Figur 2 eine Darstellung eines erfindungsgemäßen Reaktors mit einem Rotor, dessen Rotorwandung die Form eines Zylinders aufweist.

In Figur 3 ist ein erfindungsgemäßer Reaktor abgebildet, in dem ein weiterer Rotor installiert ist, der das äußere Reaktorkompartiment in zwei Subkompartimente unterteilt.

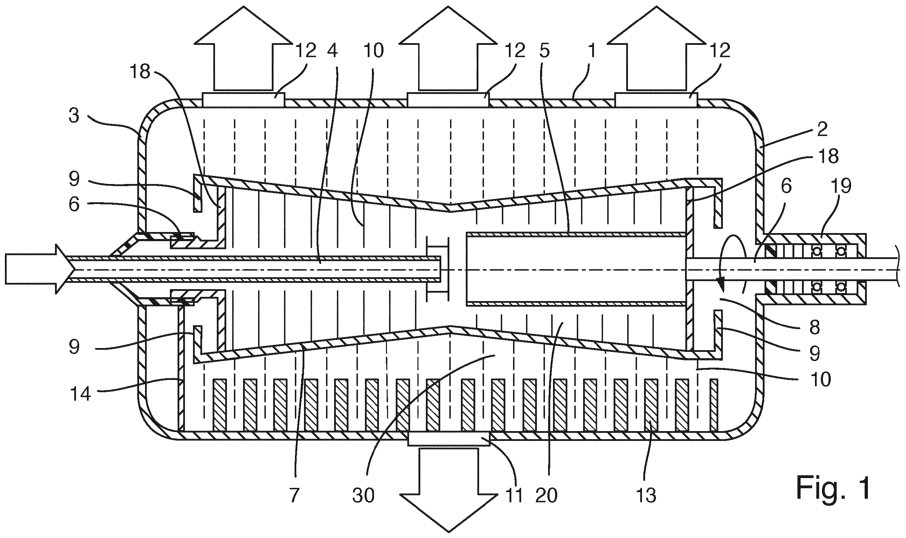

Figur 1 zeigt eine erste Ausführungsform der Erfindung, bei der ein zentraler Eintritt der Polymerschmelze in den Reaktor vorgesehen ist. Das Rohr 4, das durch die eintrittsseitige Stirnwand 3 verläuft, ragt etwa bis zur Mitte in den Rotor hinein. Das Reaktorgehäuse 1 ist annähernd zylindrisch geformt und weist Stirnwände 2, 3 auf. Zudem ist das Reaktorgehäuse 1 als Vakuumbehälter ausgelegt, der bei einem geringen Druck von 0,1-3,0 mbar oder weniger verwendet werden kann. Der Rotor ist konzentrisch um die durch eine gestrichelte Linie angedeutete Längsachse angeordnet. Die Rotorwandung 7 weist die Form eines Doppelkonus auf. An der Position, an der die Polymerschmelze in den Reaktor eintritt, ist ein Knick in der Rotorwandung 7 zu erkennen, der andeutet, dass an dieser Stelle der eine Konus in den anderen Konus übergeht. An beiden Enden ist der Rotor über ein Befestigungsmittel 18 mit einem Wellenende 6 verbunden. Zudem weist der Rotor an beiden Enden eine Öffnung 8 auf, die von einem radial umlaufenden Stauwehr 9 begrenzt wird.

Der konzentrisch in dem Reaktorgehäuse angeordnete Rotor bildet das Kompartimentierungselement, welches den Reaktorinnenraum in ein inneres Reaktorkompartiment 20 (innerhalb des Rotors, "Stufe-1") und ein äußeres Reaktorkompartiment 30 (den Zwischenraum zwischen Rotor und Reaktorgehäuse, "Stufe-2") unterteilt.

In dem äußeren Reaktorkompartment 30 sind in dem Bereich unterhalb des Rotors statische Abstreifer 13 an der Reaktorgehäusewand befestigt. In die Zwischenräume der statischen Abstreifer 13 greifen Mischelemente 10 ein, die außen an der Rotorwandung 7 angebracht sind. Außerdem weist das Reaktorgehäuse 1 unterhalb des Rotors einen Auslass 11 auf. Oberhalb des Rotors sind mehrere Brüdenstutzen 12 angedeutet.

An der dem inneren Reaktorkompartiment 20 zugewandten Seite der Rotorwandung sind verschiedene Transport- und/oder Mischelemente 10 befestigt. Diese können z.B. als Scheiben, die mit runden- oder vieleckigen Öffnungen versehen sind-, oder strukturierte oder unstrukturierte Lochscheiben mit oder ohne Schöpfelemente ausgeführt sein, die spiral- oder schraubenförmig an der Welle versetzt angeordnet werden. Alle Transport- und/oder Mischelemente weisen jedoch mittig eine Aussparung auf, so dass ein Hohlraum entsteht. Dieser Hohlraum dient einerseits der Durchführung des Rohres 4. Andererseits ermöglicht er ein ungehindertes Entweichen der freigewordenen Gase. Der Hohlraum kann, wie im rechten Teil der Darstellung angedeutet ist, auch durch eine begrenzende Hülse 5 definiert sein.

Der Rotor bildet zusammen mit der den Hohlraum begrenzenden Hülse 5 und den Misch- und/oder Transportelementen 10 eine in sich stabile und feste Tragkonstruktion.

Auch die Wellenenden 6 des Rotors sind stabil gelagert. Eintrittsseitig sind sie in einem Gleitlager im Inneren des Reaktors und antriebsseitig in einem klassischen Zylinder-Rollenlager (Lagergehäuse 19 außerhalb des Reaktors) aufgehängt. Das Lagergehäuse 19 ist dabei mit dem Reaktorgehäuse verbunden. Zur Abdichtung der Antriebswelle gegenüber der Atmosphäre kann ein mit Sperrflüssigkeit beaufschlagtes Dichtungssystem eingesetzt werden. Alternativ können aber auch beide Lager außerhalb des Reaktors angeordnet werden und es kann eine sogenannte Drehkopfdichtung (z.B. von der Fa. Christian Maier GmbH & Co. KG, Heidenheim) verwendet werden.

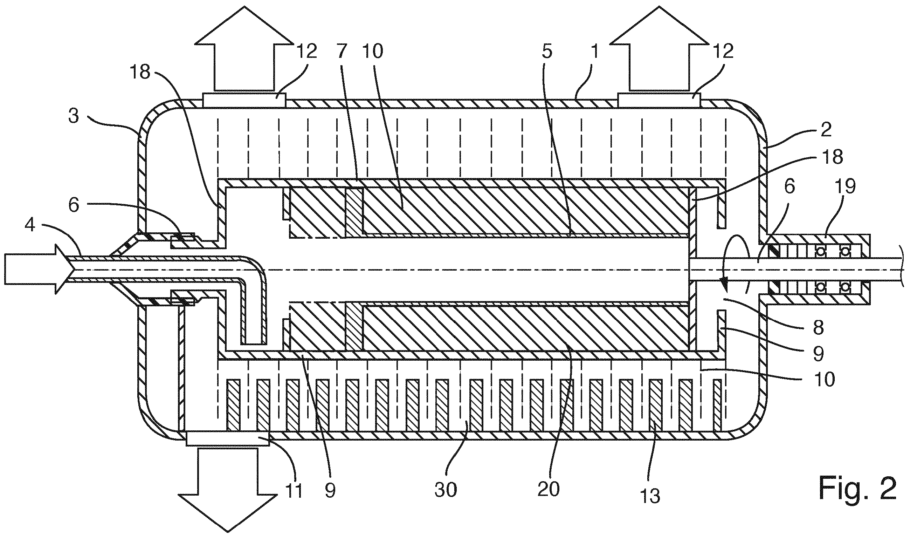

In Figur 2 ist ein erfindungsgemäßer Reaktor nach einer zweiten Ausführungsform gezeigt. Diese unterscheidet sich von der ersten Ausführungsform in der Figur 1 einerseits dadurch, dass das Rohr 4, mit dem die Polymerschmelze in den Reaktor eingeleitet wird, nicht in der Mitte des Reaktors, sondern schon bei ca. 10% der gesamten Reaktorlänge endet. Darüber hinaus weist die Rotorwandung 7 eine zylindrische Form auf und der Rotor ist nur auf einer Seite geöffnet. Die zweite Seite des Rotors, die der eintrittsseitigen Stirnwand 3 direkt gegenüberliegt, ist durch ein als eine Vollscheibe ausgebildetes Befestigungselement 18 verschlossen. So wird verhindert, dass die Polymerschmelze direkt nach dem Eintritt in den Reaktor vom inneren Reaktorkompartiment 20 in das äußere Reaktorkompartiment 30 gelangt, ohne mit den inneren Misch- und Förderelementen 10 in Kontakt gekommen zu sein. Zudem unterscheidet sich diese Ausführungsform des Reaktors dadurch, dass die im inneren Reaktorkompartiment 20 installierten Misch- und Transportelemente 10 geneigt angeordnet sind. Auch die Brüdenstutzen 12 und der Auslass 11 sind anders positioniert als in dem Reaktor gemäß Figur 1.

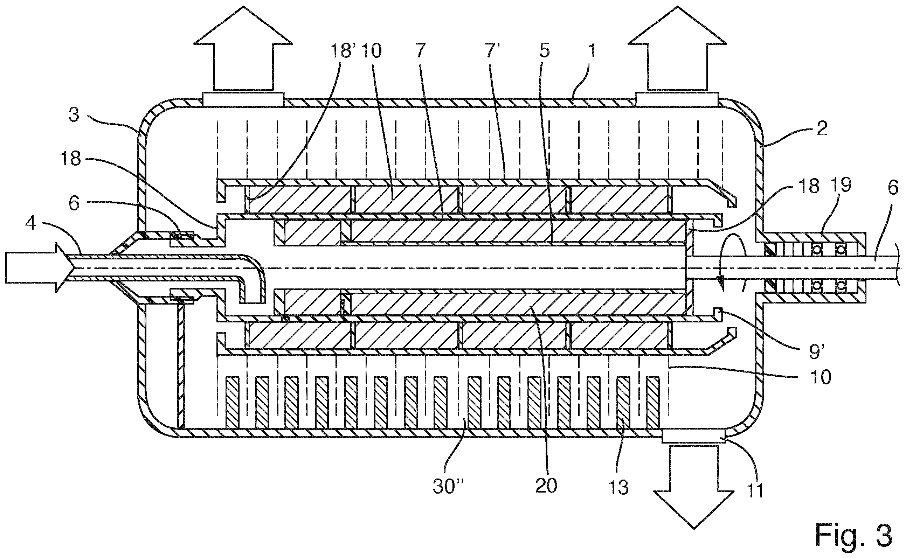

Figur 3 zeigt eine komplexere Variante des erfindungsgemäßen Reaktors, in der das Kompartimentierungselement aus zwei Rotoren besteht. Der weitere Rotor ist konzentrisch zu dem ersten inneren Rotor angeordnet und weist ebenfalls eine für die Polymerschmelze undurchlässige Rotorwandung 7' auf. Zudem ist der weitere Rotor mit Befestigungsmitteln 18' mit dem ersten, inneren Rotor verbunden, so dass er im Betrieb mit der gleichen Frequenz rotiert. Die Befestigungsmittel 18' können aus Flach-, Rundeisen oder aus durchlässigen Scheiben bestehen. Der weitere Rotor unterteilt das äußere Reaktorkompartiment in zwei Subkompartimente 30' und 30" und bewirkt, dass eine darin behandelte Polymerschmelze eine zweimalige Umkehr in ihrer Flussrichtung erfährt. Der Reaktorinnenraum wird durch das zweimalige Umlenken der Polymerschmelze am Überlaufwehr 9' und 9" optimal ausgenutzt.

## Patentansprüche

1. Reaktor zur Entgasung einer Polymerschmelze und Polykondensation bis zum Erreichen einer gewünschten Polymerkettenlänge umfassend
- ein horizontal ausgerichtetes Reaktorgehäuse (1), das zwei Stirnwände (2, 3) und mindestens einen Auslass (11) für die entgaste Polymerschmelze sowie mindestens einen Brüdenstutzen (12) aufweist;
- ein darin horizontal angeordnetes Kompartimentierungselement, das einen Rotor mit einer für die Polymerschmelze undurchlässigen Rotorwandung (7) aufweist, wobei der Rotor mindestens eine durch eine Stauwehranordnung (9) begrenzte Öffnung (8) in Richtung einer Stirnwand (2, 3) des Reaktorgehäuses (1) aufweist und das Innere des Reaktorgehäuses (1) in ein inneres (20) und ein äußeres Reaktorkompartiment (30) unterteilt; und
- ein durch die eintrittsseitige Stirnwand (3) verlaufendes Rohr (4), das im Inneren des Rotors endet und durch welches die Polymerschmelze in das innere Reaktorkompartiment (20) eingeleitet werden kann.

2. Reaktor gemäß Anspruch 1, **dadurch gekennzeichnet, dass** die Rotorwandung (7) zumindest auf einer Innenseite, bevorzugt aber auf beiden Seiten, mit einer Vielzahl an Transportelementen und/oder Mischelementen (10) bestückt ist.

3. Reaktor gemäß dem vorhergehenden Anspruch, **dadurch gekennzeichnet, dass** die Transportelemente und/oder Mischelemente (10), mit denen die Innenseite der Rotorwandung (7) bestückt ist, geneigt angeordnet sind, bevorzugt in einem Winkel zwischen 60 und 90 °, besonders bevorzugt zwischen 80 und 90 ° zur Rotorwandung (7).

4. Reaktor gemäß einem der beiden vorhergehenden Ansprüche, **dadurch gekennzeichnet, dass** das Reaktorgehäuse (1) auf einer inneren Oberfläche mit statischen Abstreifern (13) bestückt ist, die bevorzugt in einem Bereich unterhalb des Rotors so angeordnet sind, dass sie zwischen die auf einer Außenseite der Rotorwandung (7) angebrachten Mischelemente (10) eingreifen.

5. Reaktor gemäß einem der vorhergehenden Ansprüche, **dadurch gekennzeichnet, dass** der Rotor mindestens eine weitere Stauwehranordnung (9') aufweist, die sich bevorzugt innerhalb des inneren Reaktorkompartiments (20) befindet.

6. Reaktor gemäß einem der vorhergehenden Ansprüche, **dadurch gekennzeichnet, dass** die Rotorwandung (7) zylindrisch, kegelstumpfartig oder in Form eines Doppelkonus ausgestaltet ist.

7. Reaktor gemäß einem der vorhergehenden Ansprüche, **dadurch gekennzeichnet, dass** der Rotor mit zwei drehbar gelagerten Wellenenden (6) verbunden ist, wobei die Verbindung bevorzugt durch Befestigungsmittel (18), insbesondere Speichen, Speichenräder, Lochscheiben, und/oder Vollscheiben, und gegebenenfalls über eine Hülse (5) hergestellt wird.

8. Reaktor gemäß einem der vorhergehenden Ansprüche, **dadurch gekennzeichnet, dass** das Rohr (4) bis zu einem Punkt zwischen 30 und 70%, bevorzugt zwischen 40 und 60%, der Reaktorlänge in das Reaktorgehäuse (1) hineinragt und der Rotor zwei durch jeweils eine Stauwehranordnung (9) begrenzte Öffnungen (8) in Richtung der zwei Stirnwände (2, 3) aufweist.

9. Reaktor gemäß einem der Ansprüche 1 bis 7, **dadurch gekennzeichnet, dass** das Rohr (4) bis zu einem Punkt bei weniger als 15%, bevorzugt weniger als 10 %, der Reaktorlänge in den Reaktor hineinragt und der Rotor nur eine durch eine Stauwehranordnung (9) begrenzte Öffnung (8) in Richtung der Stirnwand (2) aufweist, die der eintrittsseitigen Stirnwand (3) gegenüberliegt.

10. Reaktor gemäß einem der vorhergehenden Ansprüche, **dadurch gekennzeichnet, dass** das Verhältnis von Länge zu Durchmesser des Reaktorgehäuses (1) 1,1 bis 4,0, bevorzugt 1,5 bis 3,0, besonders bevorzugt 2,5 bis 3,0, beträgt.

11. Reaktor gemäß einem der vorhergehenden Ansprüche, **dadurch gekennzeichnet, dass** das Kompartimentierungselement einen weiteren Rotor mit einer für die Polymerschmelze undurchlässigen Rotorwandung (7') enthält, der das äußere Reaktorkompartiment (30) in zwei Subkompartimente (30', 30") unterteilt, wobei der weitere Rotor bevorzugt durch Befestigungsmittel (18) am Rotor befestigt ist.

12. Verfahren zur Entgasung einer Polymerschmelze bei dem einem Reaktor gemäß einem der vorhergehenden Ansprüche eine Polymerschmelze zugeführt wird und die Polymerschmelze
durch ein Rohr (4) in ein von einem Rotor umschlossenes erstes Reaktorkompartiment (20) geführt wird,
anschließend in Richtung mindestens einer Stauwehranordnung (9) transportiert wird,
die mindestens eine Stauwehranordnung (9) passiert und
in mindestens ein äußeres Reaktorkompartiment (30) gelangt,
bevor sie den Reaktor verlässt.

13. Verfahren gemäß Anspruch 12, **dadurch gekennzeichnet, dass** die Flussrichtung der Polymerschmelze mindestens einmal umgekehrt wird, bevor sie den Reaktor verlässt, bevorzugt beim Passieren der mindestens einen Stauwehranordnung (9).

14. Verfahren gemäß einem der Ansprüche 12 oder 13, **dadurch gekennzeichnet, dass** die zugeführte Polymerschmelze eine intrinsische Viskosität von maximal 0,6 dL/g, bevorzugt von maximal 0,5 dL/g, besonders bevorzugt von 0,25 bis 0,35 dL/g aufweist.

15. Verfahren gemäß einem der Ansprüche 12 bis 14, **dadurch gekennzeichnet, dass** die Polymerschmelze dem Reaktor mit Hilfe einer Pumpe zugeführt wird und mit Hilfe von rotierenden, in Förderrichtung geneigten Transportelementen und/oder Mischelementen (10) von dem ersten Reaktorkompartiment (20) zu dem mindestens einen weiteren Reaktorkompartiment (30) gefördert wird, wobei die Rotationsgeschwindigkeit bevorzugt 0,5 - 10 Umdrehungen pro Minute, besonders bevorzugt 1,0-5 Umdrehungen pro Minute, insbesondere 1,5-3 Umdrehungen pro Minute, beträgt.

16. Verfahren gemäß einem der Ansprüche 12 bis 15, **dadurch gekennzeichnet, dass** der Reaktor kontinuierlich evakuiert wird, so dass im Reaktorinneren bevorzugt ein Druck von 0,1 bis 3,0 mbar, bevorzugt von 0,3 bis 1,0 mbar herrscht.

17. Verwendung des Verfahrens gemäß einem der Ansprüche 12 bis 16 zur Herstellung von Polyethylenterephthalat (PET) mit einer intrinsischen Viskosität im Bereich von 0,6 bis 1,0 dL/g, bevorzugt in einem Bereich von 0,70 bis 0,85 dL/g, besonders bevorzugt in einem Bereich von 0,72 bis 0,82 dL/g.

## Claims

1. Reactor for the devolatilization of a polymer melt and polycondensation to attainment of a desired polymer chain length, comprising
- a horizontally aligned reactor housing (1) which has two end faces (2, 3) and at least one outlet (11) for the devolatilized polymer melt and also at least one vapour port (12);
- a compartmenting element which is arranged horizontally therein and comprises a rotor having a rotor wall (7) which is impermeable to the polymer melt, where the rotor has at least one opening (8) bounded by a weir arrangement (9) in the direction of an end face (2, 3) of the reactor housing (1) and divides the interior of the reactor housing (1) into an inner reactor compartment (20) and an outer reactor compartment (30); and
- a tube (4) which runs through the entry-side end face (3) and ends in the interior of the rotor and by means of which the polymer melt can be introduced into the inner reactor compartment (20).

2. Reactor according to Claim 1, **characterized in that** the rotor wall (7) is equipped at least on an inside, but preferably on both sides, with a plurality of transport elements and/or mixing elements (10).

3. Reactor according to the preceding claim, **characterized in that** the transport elements and/or mixing elements (10) with which the inside of the rotor wall (7) is equipped are arranged in an inclined manner, preferably at an angle of from 60 to 90°, particularly preferably from 80 to 90°, relative to the rotor wall (7).

4. Reactor according to either of the two preceding claims, **characterized in that** the reactor housing (1) is equipped on an inner surface with static scrapers (13) which are preferably arranged in a region underneath the rotor in such a way that they engage between the mixing elements (10) installed on an outside of the rotor wall (7).

5. Reactor according to any of the preceding claims, **characterized in that** the rotor has at least one further weir arrangement (9') which is preferably located within the inner reactor compartment (20).

6. Reactor according to any of the preceding claims, **characterized in that** the rotor wall (7) has a cylindrical shape, the shape of a truncated cone or is in the form of a double cone.

7. Reactor according to any of the preceding claims, **characterized in that** the rotor is connected to two shaft ends (6) which are mounted so as to be rotatable, with the connection preferably being established by fastening means (18), in particular spokes, spoke wheels, perforated discs and/or solid discs, and optionally via a sheath (5).

8. Reactor according to any of the preceding claims, **characterized in that** the tube (4) projects into the reactor housing (1) to a point which is from 30 to 70%, preferably from 40 to 60%, of the reactor length and the rotor has two openings (8) each bounded by a weir arrangement (9) in the direction of the two end faces (2, 3).

9. Reactor according to any of Claims 1 to 7, **characterized in that** the tube (4) projects into the reactor to a point which is less than 15%, preferably less than 10%, of the reactor length and the rotor has only one opening (8) bounded by a weir arrangement (9) in the direction of the end face (2) which is opposite the entry-side end face (3).

10. Reactor according to any of the preceding claims, **characterized in that** the ratio of length to diameter of the reactor housing (1) is from 1.1 to 4.0, preferably from 1.5 to 3.0, particularly preferably from 2.5 to 3.0.

11. Reactor according to any of the preceding claims, **characterized in that** the compartmenting element contains a further rotor having a rotor wall (7') which is impermeable to the polymer melt, which further rotor divides the outer reactor compartment (30) into two subcompartments (30', 30"), with the further rotor preferably being fastened by means of fastening means (18) to the rotor.

12. Process for the devolatilization of a polymer melt, wherein a polymer melt is fed to a reactor according to any of the preceding claims and
the polymer melt
is conveyed through a tube (4) into a first reactor compartment (20) enclosed by a rotor,
is subsequently transported in the direction of at least one weir arrangement (9),
passes over the at least one weir arrangement (9) and
goes into at least one outer reactor compartment (30),
before leaving the reactor.

13. Process according to Claim 12, **characterized in that** the flow direction of the polymer melt is reversed at least once before it leaves the reactor, preferably while passing the at least one weir arrangement (9).

14. Process according to either Claim 12 or 13, **characterized in that** the polymer melt fed in has an intrinsic viscosity of not more than 0.6 dl/g, preferably not more than 0.5 dl/g, particularly preferably from 0.25 to 0.35 dl/g.

15. Process according to any of Claims 12 to 14, **characterized in that** the polymer melt is fed to the reactor by means of a pump and is transported from the first reactor compartment (20) to the at least one further reactor compartment (30) by means of rotating transport elements and/or mixing elements (10) which are inclined in the transport direction, with the speed of rotation preferably being 0.5-10 revolutions per minute, particularly preferably 1.0-5 revolutions per minute, in particular 1.5-3 revolutions per minute.

16. Process according to any of Claims 12 to 15, **characterized in that** the reactor is evacuated continuously so that a pressure of from 0.1 to 3.0 mbar, preferably from 0.3 to 1.0 mbar, preferably prevails in the interior of the reactor.

17. Use of the process according to any of Claims 12 to 16 for the preparation of polyethylene terephthalate (PET) having an intrinsic viscosity in the range from 0.6 to 1.0 dl/g, preferably in the range from 0.70 to 0.85 dl/g, particularly preferably in the range from 0.72 to 0.82 dl/g.

## Revendications

1. Réacteur pour le dégazage d'une masse fondue de polymère et la polycondensation jusqu'à obtention d'une longueur de chaîne polymère souhaitée, comprenant :
- une enceinte de réacteur orientée horizontalement (1), qui présente deux parois frontales (2, 3) et au moins une sortie (11) pour la masse fondue de polymère dégazée ainsi qu'au moins une tubulure de vapeurs (12) ;
- un élément de compartimentation agencé horizontalement à l'intérieur, qui présente un rotor comprenant une paroi de rotor (7) imperméable à la masse fondue de polymère, le rotor présentant au moins une ouverture (8) délimitée par un agencement de barrage (9) en direction d'une paroi frontale (2, 3) de l'enceinte de réacteur (1) et subdivisant l'intérieur de l'enceinte de réacteur (1) en un compartiment de réacteur intérieur (20) et un compartiment de réacteur extérieur (30) ; et
- un tube (4) traversant la paroi frontale côté entrée (3), qui se termine à l'intérieur du rotor et par lequel la masse fondue de polymère peut être introduite dans le compartiment de réacteur intérieur (20).

2. Réacteur selon la revendication 1, **caractérisé en ce que** la paroi de rotor (7) est équipée, au moins sur un côté intérieur, mais de préférence sur les deux côtés, d'une pluralité d'éléments de transport et/ou d'éléments de mélange (10).

3. Réacteur selon la revendication précédente, **caractérisé en ce que** les éléments de transport et/ou les éléments de mélange (10), desquels le côté intérieur de la paroi de rotor (7) est équipé, sont agencés de manière inclinée, de préférence selon un angle compris entre 60 et 90°, de manière particulièrement préférée entre 80 et 90° par rapport à la paroi de rotor (7).

4. Réacteur selon l'une quelconque des deux revendications précédentes, **caractérisé en ce que** l'enceinte de réacteur (1) est équipée de racleurs statiques (13) sur une surface intérieure, qui sont de préférence agencés dans une zone en dessous du rotor, de telle sorte qu'ils pénètrent entre les éléments de mélange (10) disposés sur un côté extérieur de la paroi de rotor (7).

5. Réacteur selon l'une quelconque des revendications précédentes, **caractérisé en ce que** le rotor présente au moins un autre agencement de barrage (9'), qui se trouve de préférence à l'intérieur du compartiment de réacteur intérieur (20).

6. Réacteur selon l'une quelconque des revendications précédentes, **caractérisé en ce que** la paroi de rotor (7) est conçue sous forme cylindrique, tronconique ou en forme de double cône.

7. Réacteur selon l'une quelconque des revendications précédentes, **caractérisé en ce que** le rotor est relié à deux extrémités d'arbre (6) montées rotatives, la liaison étant réalisée de préférence par des moyens de fixation (18), en particulier des rayons, des roues à rayons, des disques perforés et/ou des disques pleins, et éventuellement par l'intermédiaire d'une douille (5).

8. Réacteur selon l'une quelconque des revendications précédentes, **caractérisé en ce que** le tube (4) pénètre dans l'enceinte de réacteur (1) jusqu'à un point compris entre 30 et 70 %, de préférence entre 40 et 60 %, de la longueur de réacteur et le rotor présente deux ouvertures (8) délimitées chacune par un agencement de barrage (9) en direction des deux parois frontales (2, 3).

9. Réacteur selon l'une quelconque des revendications 1 à 7, **caractérisé en ce que** le tube (4) pénètre dans le réacteur jusqu'à un point situé à moins de 15 %, de préférence à moins de 10 %, de la longueur de réacteur et le rotor ne présente qu'une ouverture (8) délimitée par un agencement de barrage (9) en direction de la paroi frontale (2) qui est opposée à la paroi frontale côté entrée (3).

10. Réacteur selon l'une quelconque des revendications précédentes, **caractérisé en ce que** le rapport entre la longueur et le diamètre de l'enceinte de réacteur (1) est de 1,1 à 4,0, de préférence de 1,5 à 3,0, de manière particulièrement préférée de 2,5 à 3,0.

11. Réacteur selon l'une quelconque des revendications précédentes, **caractérisé en ce que** l'élément de compartimentation contient un autre rotor comprenant une paroi de rotor (7') imperméable à la masse fondue de polymère, qui subdivise le compartiment de réacteur extérieur (30) en deux sous-compartiments (30', 30"), l'autre rotor étant de préférence fixé au rotor par des moyens de fixation (18).

12. Procédé de dégazage d'une masse fondue de polymère, dans lequel une masse fondue de polymère est amenée à un réacteur selon l'une quelconque des revendications précédentes, et la masse fondue de polymère
est conduite par un tube (4) dans un premier compartiment de réacteur (20) entouré d'un rotor,
puis est transportée en direction d'au moins un agencement de barrage (9),
traverse l'au moins un agencement de barrage (9) et
parvient dans au moins un compartiment de réacteur extérieur (30),
avant de quitter le réacteur.

13. Procédé selon la revendication 12, **caractérisé en ce que** la direction d'écoulement de la masse fondue de polymère est inversée au moins une fois avant qu'elle ne quitte le réacteur, de préférence lorsqu'elle traverse l'au moins un agencement de barrage (9).

14. Procédé selon l'une quelconque des revendications 12 ou 13, **caractérisé en ce que** la masse fondue de polymère amenée présente une viscosité intrinsèque de 0,6 dl/g au maximum, de préférence de 0,5 dl/g au maximum, de manière particulièrement préférée de 0,25 à 0,35 dl/g.

15. Procédé selon l'une quelconque des revendications 12 à 14, **caractérisé en ce que** la masse fondue de polymère est amenée au réacteur à l'aide d'une pompe et est transportée à l'aide d'éléments de transport et/ou d'éléments de mélange (10) rotatifs, inclinés dans la direction de transport, du premier compartiment de réacteur (20) vers l'au moins un autre compartiment de réacteur (30), la vitesse de rotation étant de préférence de 0,5 à 10 tours par minute, de manière particulièrement préférée de 1,0 à 5 tours par minute, en particulier de 1,5 à 3 tours par minute.

16. Procédé selon l'une quelconque des revendications 12 à 15, **caractérisé en ce que** le réacteur est mis sous vide en continu, de telle sorte qu'une pression de préférence de 0,1 à 3,0 mbar, de préférence de 0,3 à 1,0 mbar, règne à l'intérieur du réacteur.

17. Utilisation du procédé selon l'une quelconque des revendications 12 à 16 pour la fabrication de polyéthylène téréphtalate (PET) ayant une viscosité intrinsèque dans la plage allant de 0,6 à 1,0 dl/g, de préférence dans une plage allant de 0,70 à 0,85 dl/g, de manière particulièrement préférée dans une plage allant de 0,72 à 0,82 dl/g.
